# EUROPÄISCHE PATENTANMELDUNG

(11) **EP 0 695 728 A2**
(43) Veröffentlichungstag der Anmeldung: **07.02.1996**
(21) Anmeldenummer: 95111240.8
(22) Anmeldetag: 18.07.1995
(51) Int. Cl.: C04B 28/02

(54) **Herstellung von Baustoffen und Baukörpern sowie Bauplatten aus Faserzement**

(30) Priorität: 03.08.1994 DE 4427383; 12.07.1995 DE 19525266
(71) Anmelder: Fulgurit Baustoffe GmbH, D-31515 Wunstorf (DE)
(72) Erfinder: Berkenkamp, Rolf, Dipl.-Ing., D-31515 Wunstorf (DE); Brix, Horst, Dipl.-Ing., D-31698 Lindhorst (DE); Dietrich, Johannes, Dipl.-Ing., D-31515 Wunstorf (DE); Schumm, Rudolf, Dipl.-Ing., D-63628 Bad Soden-Salmünster (DE)
(74) Vertreter: Wehser, Wulf, Dipl.-Ing.

(57) **Zusammenfassung**

Ein Verfahren zur Herstellung von Baustoffen und Baukörpern sowie Bauplatten aus Faserzement nach dem Hatschekverfahren, wobei Zement als Bindemittel und Fasern, wie Zellstoffasern, Kunststofffasern und dergleichen als Armierung Verwendung finden, wird so durchgeführt, daß ausreichende Festigkeit erreicht wird und Rißbildungen weitgehend vermieden werden.

Hierzu ist erfindungsgemäß vorgesehen, daß ein Teil der Armierungsfasern durch aufgefaserte Kunststoff-Reststoffe und/oder -Abfälle ersetzt ist.

## Beschreibung

Die Erfindung betrifft die Herstellung von Baustoffen und Baukörpern sowie Bauplatten aus Faserzement, wobei Zement als Bindemittel und Fasern, wie Zellstoffasern, Kunststoffasern und dergleichen als Armierung Verwendung finden.

Bei bekannten Baustoffen dieser Art besteht die Schwierigkeit, daß der Wasserhaushalt oder die Feuchte über dem Querschnitt der Baustoffe und Bauplatten, insbesondere bei gepreßten Baustoffen und Bauplatten ungleichmäßig sein kann, wenn die Austrocknung über den Querschnitt der Baustoffe oder Bauplatten ungleichmäßig ist, wobei trockenere Stellen mit Stellen größerer Feuchte abwechseln, was zu Rißbildungen in den Baukörpern oder Bauplatten, vor allem im Randbereich, führen kann.

Diese Rißbildungen sind äußerst nachteilig, so daß der Erfindung die Aufgabe zugrunde liegt, einen Baustoff oder Bauplatten der eingangs genannten Art zu schaffen, bei welchen diese Rißbildungen vermieden werden.

Diese Aufgabe wird erfindungsgemäß dadurch gelöst, daß ein Teil der Armierungsfasern durch aufgefaserte Kunststoff-Reststoffe und/oder -Abfälle ersetzt ist.

Bei diesem Verfahren kann auch ein Teil der Armierungsfasern durch aufgefaserte Zellstoff-Reststoffe und/oder -Abfälle ersetzt werden.

Ferner ist es möglich bei diesem Verfahren sowohl einen Teil der Armierungsfasern durch aufgefaserte Kunststoff-Reststoffe und/oder -Abfälle als auch durch aufgefaserte Zellstoff-Reststoffe und/oder -Abfälle zu ersetzen.

Mit dieser Anordnung wird erreicht, daß erstmals eine Verarbeitung eines solchen Materials auf einer Hatschek-Maschine möglich wird, weil die Zementbindung durch elektrische Oberflächenladung aufgrund der Verwendung dieses Kunststoffmaterials so verbessert wird, daß die Siebzylinderdurchgänge stark reduziert werden.

Beim Stand der Technik wird nämlich die Reduzierung des Siebzylinderdurchganges des Zements dadurch erreicht, daß es durch Zugabe von Flockungsmitteln zu einer sogenannten Flockenbildung kommt, wobei die Flocken eine Größe haben, die einen Durchgang des Feststoffes durch den Siebzylinder nicht vollständig verhindern.

Im Gegensatz dazu wird bei der erfindungsgemäßen Anordnung bzw. bei dem erfindungsgemäßen Baumaterial eine Flockenbildung durch den Kunststoff herbeigeführt, die Flocken von einer Größe bildet, welche es im wesentlichen ausgeschlossen erscheinen lassen, daß der Feststoff durch die Öffnungen des Siebzylinders hindurchtreten kann.

Das Wasserrückhaltevermögen bzw. das Rückhaltevermögen des Zementes ist bei dem bekannten Verfahren ebenso wie bei dem erfindungsgemäßen Verfahren etwa dasselbe. Das erfindungsgemäße Verfahren hat aber den erheblichen Vorteil, daß die Feuchtigkeitsverteilung über den Querschnitt des Baukörpers bzw. des Baumaterials gleichmäßig ist, so daß sichergestellt ist, daß die bereits erwähnte nachteilige Rißbildung aus Gründen der Ungleichmäßigkeit der Feuchteverteilung vermieden wird.

Der ganz erhebliche Vorteil des erfindungsgemäßen Verfahrens besteht nämlich in der verbesserten Kapillarausbildung und damit in der verbesserten Porosität des Baustoffes, deren Gleichmäßigkeit besser als bei den bekannten Verfahren Rißbildungen ausschließt.

Mit dem erfindungsgemäßen Verfahren wird aufgrund der unterschiedlichen Flockenausbildung (große Flocken gegenüber kleinen Flocken beim Stand der Technik) zwar eine andere Matrix erzeugt, die aber die obengenannten Vorteile hinsichtlich der Gleichmäßigkeit der Feuchteverteilung aufweist. Diese Gleichmäßigkeit ist trotz der Flockengröße gegeben.

Diese Matrix läßt sich ohne weiteres auf einer Hatschekmaschine fahren, wobei Schwierigkeiten hinsichtlich der Ausbildung von Baukörpern oder Bauplatten auf Format- und Brustwalze nicht auftreten.

Der Anteil der Kunststoffmenge kann 5 bis 25 Gew.% betragen, besonders vorteilhaft ist aber eine Menge von 15 bis 25 Gew.%. Durch diese Menge der eingesetzten Kunststoffe wird eine homogene Matrix erzeugt. Die Auswahl der vorgenannten Recycling-Kunststoffe ermöglicht aufgrund der Kostensituation erstmals den wirtschaftlichen Einsatz dieser Menge. Das so aussortierte Material kann nach einer entsprechenden Aufbereitung mit dem Hatschekverfahren verarbeitet werden.

Zur Herbeiführung der notwendigen Einbindung dient die sogenannte Zeta-Potential-Differenz, welches feine und kleine Flocken liefert, so daß zur Beaufschlagung des Siebzylinders und zur Verhinderung von Durchdringen von Zement durch die Öffnungen des Siebzylinders eine Zusatzflockung erforderlich ist, bei welcher ebenfalls die einzelnen Flocken wesentlich größer als diejenigen sind, die durch das unterschiedliche Zeta-Potential erzeugt werden.

Das Zeta-Potential ist also eine elektrische Oberflächenladung, das zu einer engen Bindung zwischen dem Zement und den Fasern führt. Es handelt sich hier um eine Potentialdifferenz, die entweder zwischen Plus und Minus oder zwischen zwei Plus und/oder zwei Minuswerten liegt.

## Patentansprüche

1. Verfahren zur Herstellung von Baustoffen und Baukörpern sowie Bauplatten aus Faserzement nach dem Hatschekverfahren, wobei Zement als Bindemittel und Fasern, wie Zellstoffasern, Kunststoffasern und dergleichen als Armierung Verwendung finden, dadurch gekennzeichnet, daß ein Teil der Armierungsfasern durch aufgefaserte Kunststoff-Reststoffe und/oder -Abfälle ersetzt ist.

2. Verfahren zur Herstellung von Baustoffen und Baukörpern sowie Bauplatten aus Faserzement nach dem Hatschekverfahren, wobei Zement als Bindemittel und Fasern, wie Zellstoffasern, Kunststoffasern und dergleichen als Armierung Verwendung finden, dadurch gekennzeichnet, daß ein Teil der Armierungsfasern durch aufgefaserte Zellstoff-Reststoffe und/oder -Abfälle ersetzt ist.

3. Verfahren zur Herstellung von Baustoffen und Baukörpern sowie Bauplatten aus Faserzement nach dem Hatschekverfahren, wobei Zement als Bindemittel und Fasern, wie Zellstoffasern, Kunststoffasern und dergleichen als Armierung Verwendung finden, dadurch gekennzeichnet, daß ein Teil der Armierungsfasern durch aufgefaserte Kunststoff-Reststoffe und/oder-Abfälle und ein weiterer Teil durch aufgefaserte Zellstoff-Reststoffe und/oder-Abfälle ersetzt ist.

4. Verfahren nach einem der vorhergehenden Ansprüche, dadurch gekennzeichnet, daß der Anteil der genannten Materialien 5 bis 25 Gew.-% der gesamten Matrix beträgt.

5. Verfahren nach Anspruch 1 bis 3, dadurch gekennzeichnet, daß der Anteil der genannten Materialien 15 bis 25 Gew.-% der gesamten Matrix beträgt.

6. Verfahren nach einem der vorhergehenden Ansprüche, dadurch gekennzeichnet, daß Flocken aus Zement und Fasern gebildet werden, die wesentlich größer als diejenigen sind, die durch ein geringer differenziertes Zeta-Potential der einzelnen Stoffe erzeugt werden.
